# FASCICULE DE BREVET EUROPEEN

(11) **EP 1 987 338 B1**
(45) Date de publication et mention de la délivrance du brevet: **24.04.2019**
(21) Numéro de dépôt: 07704157.2
(22) Date de dépôt: 26.01.2007
(51) Int. Cl.: G01L 9/00

(54) **CAPTEUR DE PRESSION A JAUGES RESISTIVES**
DRUCKSENSOR MIT WIDERSTANDSMESSGERÄTEN
PRESSURE SENSOR WITH RESISTIVE GAUGES

(30) Priorité: 24.02.2006 FR 0601652
(43) Date de publication de la demande: 05.11.2008
(73) Titulaire: Commissariat à l'Énergie Atomique et aux Énergies Alternatives, 75015 Paris (FR)
(72) Inventeur: DELAPIERRE, Gilles, F-38180 Seyssins (FR); GRANGE, Hubert, F-38100 Grenoble (FR); REY, Patrice, F-38430 St Jean de Moirans (FR)
(74) Mandataire: Bréda, Jean-Marc
(86) Numéro de dépôt international: PCT/EP2007/050766
(87) Numéro de publication internationale: WO 2007/096225

(56) Documents cités:
- EP-A2- 0 831 315
- US-A- 4 651 120
- US-A- 5 095 401
- US-A- 5 163 329
- US-A- 5 242 863
- US-A- 5 600 071
- US-A- 5 844 287
- US-A1- 2005 160 823

## Description

L'invention concerne les capteurs de pression, et plus précisément ceux qui sont fabriqués par des technologies de fabrication collective utilisées pour la microélectronique : réalisation de multiples capteurs sur une même tranche ("wafer") par dépôts de couches isolantes, conductrices semiconductrices, photogravures, dopages, etc., puis découpe de la tranche en puces individuelles correspondant chacune à un capteur, et enfin encapsulation de chaque puce de capteur.

Les applications de ces capteurs sont multiples : mesure de la pression atmosphérique, mesure de pression de pneumatiques de véhicules, etc.

Les technologies de microélectronique permettent de réaliser sur la même puce à la fois un micro-usinage d'éléments mécaniques et la constitution de circuits électroniques associés à ces éléments mécaniques. Dans un capteur de pression, les éléments mécaniques comprennent essentiellement une cavité fermée par une membrane déformable. Les éléments de transduction électronique comprennent des jauges de contrainte ou des armatures de capacité, associées à la membrane, et des circuits actifs pour détecter les variations de résistance ou de capacité en fonction des déformations de la membrane.

L'avantage des technologies de microélectronique est qu'elles permettent de réduire considérablement le coût de fabrication des capteurs. Or le coût de fabrication est particulièrement critique dans de nombreuses applications et en particulier dans des applications destinées au grand public (marché automobile par exemple, pour la détection de pression des pneumatiques).

Cependant, les technologies imaginées jusqu'à ce jour ne sont pas optimales du point de vue du coût, en particulier en raison de la complexité introduite par la réalisation des éléments mécaniques, qui nécessite des étapes se rajoutant aux étapes de fabrication des éléments de circuits électroniques.

A titre d'exemple, on a déjà proposé les solutions suivantes :

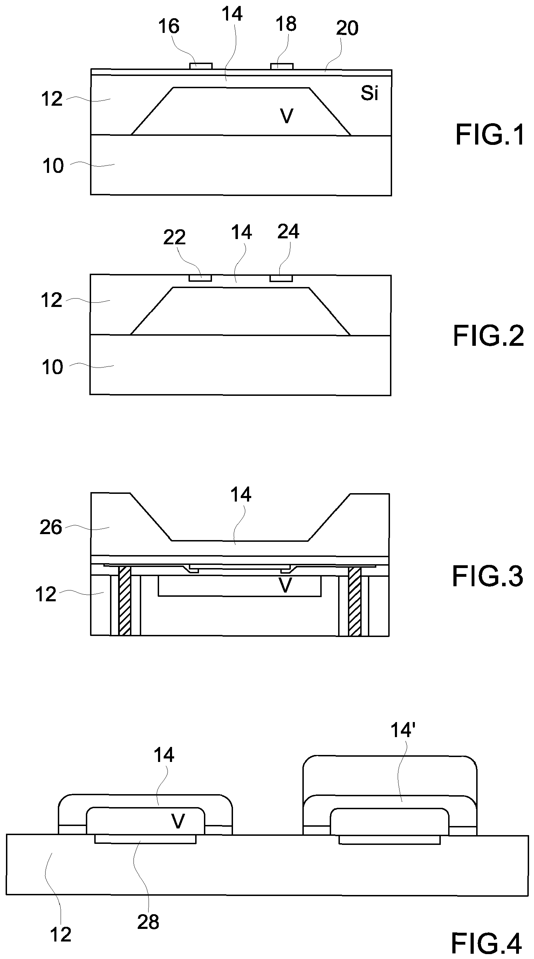

a. figure 1 : association de deux plaques, par exemple une plaque de verre 10 et une plaque de silicium 12, collées l'une contre l'autre, la cavité vide (désignée par la lettre V) étant creusée dans toute l'épaisseur de la plaque de silicium et étant fermée d'un côté par la plaque de verre 10 et de l'autre par une membrane fine 14 qui subsiste à la partie supérieure de la plaque creusée 12 ; des jauges de contrainte métalliques 16, 18 sont déposées sur cette membrane, avec interposition d'une couche isolante 20 entre la membrane de silicium 14 et les jauges.
b. figure 2 : semblable à la figure 1, mais les jauges, au lieu d'être réalisées par des couches métalliques déposées, sont des zones dopées 22, 24 du silicium de la membrane ; leur dopage est inverse de celui de la membrane ; elles ne sont isolées de la membrane que par la jonction inverse constituée entre ces zones dopées et la membrane ; la fabrication est plus simple, la sensibilité piézorésistive de ces zones dopées est très bonne lors des déformations de la membrane, mais l'isolement n'est pas bon et entraîne des défauts de fonctionnement notamment lorsque la température augmente.
c. non représenté, analogue à la figure 1 : les jauges de contrainte sont des portions d'une couche de silicium polycristallin déposée sur la couche isolante 20, en lieu et place des jauges métalliques 16 et 18. La sensibilité est intermédiaire entre celles des jauges résistives métalliques et celles des jauges à zones de silicium monocristallin dopées.
   Les solutions a, b, et c exigent un traitement de la plaque de silicium par sa face arrière, pour le creusement de la cavité V, et cela complique notablement la fabrication. De plus, il faut prendre des mesures pour protéger les jauges des agressions extérieures, chimiques ou électriques.
d. figure 3: pour éviter le traitement de face arrière et pour éviter d'avoir à protéger les jauges après fabrication, on a proposé des structures plus complexes à deux plaques de silicium : une plaque inférieure 12 comportant la cavité et éventuellement des circuits électroniques et des jauges, et une plaque supérieure 26 fermant la cavité et amincie au niveau de la cavité pour ne conserver que la membrane 14 d'épaisseur réduite. Cette solution est très complexe et coûteuse et réservée à des applications professionnelles ; elle exige notamment des mesures onéreuses pour réaliser les connexions électriques de sortie du capteur à travers toute l'épaisseur de la première plaque 12.
e. figure 4 : pour éliminer les défauts des solutions précédentes, et pour pouvoir intégrer sur le même substrat à la fois les éléments mécaniques (cavité, membrane) et les éléments de circuit électronique, on a proposé d'éliminer les jauges de contrainte et de détecter la pression par variation capacitive, la membrane 14 étant conductrice et constituant une électrode, et une autre électrode 28 étant formée dans le substrat de silicium ; la membrane 14 est formée par une couche de silicium polycristallin suspendue au-dessus de la plaque de silicium 12, la cavité vide V étant formée entre la plaque et la membrane ; des circuits électroniques peuvent être intégrés dans la plaque de silicium 12 pour constituer sur le même substrat à la fois les éléments mécaniques (cavité, membrane) et le circuit intégré de mesure ; une telle solution est décrite dans le brevet US 5 321 989 et dans l'article de M. Kandler et autres dans le Journal of Micromechanics and Microengineering 1992 pp. 199-201 " A miniature single-chip pressure and temperature sensor". Cette solution suppose de consommer une large surface de capteur car les capacités sont faibles et il faut prévoir une large électrode 28 en regard de la membrane 14. De plus, la mesure de pression est très dépendante de la température et il faut en pratique prévoir une mesure différentielle avec deux capacités semblables (à gauche et à droite sur la figure 4), dont l'une est formée à l'aide de la membrane 14, déformable sous l'effet de la pression, et l'autre est similaire mais formée à partir d'une membrane 14' indéformable ou presque. L'indéformabilité relative de la deuxième membrane peut être obtenue par dépôt de couches épaisses au-dessus de cette membrane, mais les capacités ainsi obtenues ne sont pas suffisamment identiques et la compensation en température n'est pas parfaite. Cette solution est très consommatrice de surface et donc coûteuse. De plus, la membrane est conductrice et reste soumise aux influences électriques extérieures qui peuvent perturber la mesure ; elle est aussi sensible aux influences chimiques. Enfin, le dépôt de la membrane se fait à au moins 600°C et doit donc être fait avant certaines opérations de réalisation des circuits électroniques intégrés dans le substrat ; il y a donc nécessité d'adapter la réalisation des circuits électroniques en fonction des étapes propres aux éléments mécaniques et cette dépendance gêne les évolutions ultérieures de technologie de réalisation des circuits.

Le document US 5 600 071 A (Sooriakumar K. et al.) divulgue le collage d'une première plaque de silicium (comportant un diaphragme) avec une seconde plaque de silicium (formant un couvercle), la seconde plaque de silicium comportant l'électronique associé à une mesure de pression, délocalisé par rapport à la cavité.

Le document US 5 163 329 A (Shimaoka K. et al.) divulgue un capteur de pression dont la membrane est réalisée par la déposition d'une couche mince sur un substrat en silicium.

Le document US 5 095 401 A (Zavracky P. et al.) divulgue un capteur de pression, comportant un diaphragme, ledit diaphragme comportant l'électronigue de mesure de la pression.

Le document US 2005 160823 A1 (Zdeblick M. et al.) divulgue un capteur de pression implantable permettant des mesures dont la stabilité est optimisée.

L'invention a pour but de proposer un capteur de pression plus facile à réaliser et moins coûteux (à performances égales) que les capteurs de la technique antérieure. Pour cela, l'invention s'écarte de l'idée d'utiliser des jauges semiconductrices (bien qu'elles soient beaucoup plus sensibles) et de l'idée d'utiliser une mesure capacitive, bien que la mesure capacitive soit celle qui ait permis, dans l'art antérieur, de réaliser sur un même substrat à la fois les éléments mécaniques et les circuits électronique de mesure du capteur.

L'invention propose un capteur de pression selon la revendication 1.

La cavité peut recouvrir la majeure partie des circuits de mesure associés aux jauges de contrainte, de sorte qu'il n'est pas nécessaire de prévoir que les circuits électroniques du capteur soient situés à l'extérieur de la cavité sur le substrat.

La cavité est située au-dessus du substrat et ce substrat n'est pas creusé, contrairement au substrat des capteurs antérieurs à jauges de contrainte.

Les jauges résistives sont protégées intrinsèquement des agressions extérieures puisqu'elles sont situées à l'intérieur de la cavité.

Un circuit électronique est de préférence intégré dans le substrat et la jauge résistive est reliée électriquement à ce circuit électronique intégré.

La membrane est de préférence constituée par une couche isolante mince comportant une partie déposée sur le substrat et une partie suspendue au-dessus du substrat, autoportée et séparée du substrat par la cavité fermée.

La membrane est de préférence en nitrure de silicium qui offre une très bonne résistance aux agressions chimiques ; elle est déposée de préférence par dépôt chimique en phase vapeur assisté par plasma (PECVD) ; les jauges résistives sont de préférence assemblées en pont de Wheatstone à quatre résistances.

Les circuits électroniques associés à la jauge sont situés au moins en partie au-dessous de la membrane, ce qui permet de gagner de la place.

La fabrication de la membrane autoportée et des résistances peut être réalisée après la réalisation de tous les autres éléments de circuit et peut donc être faite indépendamment de la technologie utilisée pour ces autres éléments de circuit.

Pour la réalisation d'un capteur de pression à jauges de contrainte comportant une cavité fermée par une membrane, l'invention propose un procédé de fabrication selon la revendication 7.

Le dépôt de matériau de bouchage est de préférence effectué sous très basse pression pour que la cavité reste ensuite vide. Le capteur fournit alors une mesure de pression absolue. Mais on pourrait envisager aussi que la cavité soit remplie d'air ou de gaz, la mesure de pression étant alors relative.

Bien que les jauges de contrainte résistives soient moins sensibles aux déformations que les jauges semiconductrices (en silicium), on a trouvé que les avantages de ce procédé de fabrication particulièrement économique compensent largement les inconvénients de l'utilisation de jauges moins sensibles.

Dans une réalisation avantageuse, la couche sacrificielle est en tungstène ; les jauges de contrainte peuvent, notamment dans ce cas, être des alliages nickel/chrome/silicium ou nickel/cuivre/manganèse. Ce mode de réalisation sera notamment utilisé dans les cas où la cavité a une faible épaisseur, notamment inférieure à 1 micromètre.

Dans un autre mode de réalisation avantageux, notamment pour les cavités de plus forte épaisseur (typiquement de 1 à 10 micromètres), la couche sacrificielle sera de préférence en matériau polymère et les jauges en alliages de nickel/chrome/silicium ou nickel/cuivre/manganèse ou nickel/chrome/fer. Le matériau polymère sera de préférence une résine photosensible négative gravée par un plasma oxygène.

D'autres caractéristiques et avantages de l'invention apparaîtront à la lecture de la description détaillée qui suit et qui est faite en référence aux dessins annexés dans lesquels :
- les figures 1 à 4, déjà décrites, représentent des capteurs de pression de la technique antérieure ;
- les figures 5 à 10 représentent des étapes successives de réalisation du capteur selon l'invention ;
- la figure 11 représente en coupe latérale la structure de capteur selon l'invention, obtenue après les étapes décrites aux figures précédentes ;
- la figure 12 représente, en vue de dessus, la structure du capteur.

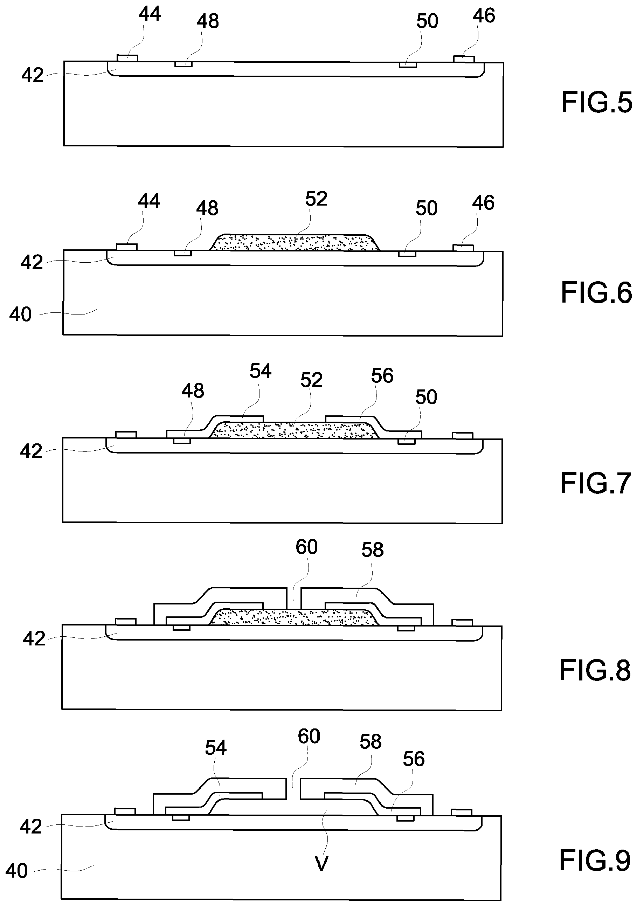

Pour réaliser le capteur de pression selon l'invention, on part d'une tranche semiconductrice destinée à la fabrication collective de plusieurs capteurs individuels, chaque capteur comportant d'une part une cavité fermée par une membrane déformable et d'autre part tous les éléments de circuit nécessaires à la production d'un signal de mesure électrique représentant la pression exercée sur la membrane depuis l'extérieur de la cavité, par exemple la pression ambiante dans l'environnement où est situé le capteur. La tranche sera découpée en fin de fabrication en puces individuelles et chaque puce de capteur sera encapsulée individuellement dans un boîtier. Seule une portion de tranche correspondant à un capteur individuel est représentée sur la figure 5, et cette portion de tranche plane constituera ce qu'on appellera ci-après le substrat 40 du capteur.

La tranche est de préférence une tranche de silicium monocristallin ; elle peut être aussi constituée par une couche épitaxiale de silicium monocristallin déposée sur un substrat différent. Tous les circuits électroniques, à l'exception des jauges de contrainte, sont fabriqués préalablement à la constitution de la cavité et de la membrane déformable, ce qui est particulièrement avantageux. Ces circuits peuvent être réalisés par n'importe quelle technologie de microélectronique et notamment par les technologies classiques de réalisation de circuits MOS, CMOS, bipolaires, biCMOS, etc.

On n'entrera pas dans le détail de cette réalisation des circuits, qui est indépendante des étapes spécifiques liées à l'invention. On a simplement représenté schématiquement sur la figure 5 une zone superficielle 42 qui comporte les circuits électroniques d'un capteur individuel, intégrés sur la face avant du substrat semiconducteur 40 ; on a représenté aussi deux plots de contact de sortie extérieure 44 et 46, montrant que le capteur peut être connecté à l'extérieur par des contacts pris sur la face avant de la tranche ; et enfin, on a représenté deux plages de contact 48 et 50, qui serviront à relier les jauges de contrainte (non encore réalisées à ce stade) aux autres éléments de circuit.

A ce stade, la surface supérieure du substrat 40 est globalement plane, même si un léger relief lié aux dépôts et gravures successifs est présent ; par surface plane, on entend le fait que le substrat n'a pas été creusé pour constituer une cavité. Le substrat n'a d'ailleurs pas été creusé non plus du côté de sa face arrière.

L'étape suivante (figure 6), qui est la première étape de réalisation des éléments mécaniques du capteur de pression, comporte le dépôt d'une couche sacrificielle 52, c'est-à-dire une couche qui sera enlevée ultérieurement. L'épaisseur de la couche est l'épaisseur désirée pour la cavité à réaliser, par exemple quelques micromètres. La couche est gravée selon un motif qui correspond exactement au volume souhaité pour la cavité et cette gravure laisse subsister un îlot de couche sacrificielle. La forme de cet îlot peut-être circulaire, par exemple avec un diamètre d'environ 100 micromètres. L'îlot de couche sacrificielle peut très bien recouvrir des éléments de circuit intégrés dans le substrat, par exemple les amplificateurs de mesure nécessaires pour fournir un signal électrique exploitable. Il peut même recouvrir la majeure partie des éléments de circuit intégrés. L'îlot ne recouvre cependant pas les plages de contact telles que 48 ou 50, ni les plots de contact de sortie extérieure 44, 46. Le choix du matériau de la couche sacrificielle est fait en fonction de la nécessité de pouvoir éliminer facilement ce matériau dans une étape ultérieure, sans détériorer les éléments de circuits qui ont été réalisés précédemment. Il est possible d'utiliser des matériaux minéraux ou des matériaux organiques ; un polymère tel que du polyimide ou une résine photosensible est particulièrement approprié, ou encore un métal tel que du tungstène ; le matériau doit être différent du matériau qui sera utilisé pour constituer la membrane, afin que la couche sacrificielle puisse être éliminée par attaque sélective sans attaquer la membrane ; le matériau de la couche sacrificielle doit en tous cas pouvoir être gravé par attaque anisotrope, comme on le verra ; enfin, il doit pouvoir être attaqué sans attaquer le matériau des jauges de contrainte.

L'étape suivante (figure 7) consiste à déposer puis graver une couche mince définissant les jauges de contrainte résistives telles que 54 et 56. De nombreux matériaux peuvent être utilisés pour réaliser des jauges, typiquement des métaux tels que du nickel, du fer, du chrome ou des alliages constitués à partir de ces métaux ou à partir d'autres matériaux encore. Les matériaux préférés sont ceux qui ont une résistivité élevée et peu dépendante de la température. Le dépôt est de préférence réalisé par pulvérisation cathodique à basse température, notamment si la couche sacrificielle est en matière organique.

Dans le cas d'une couche sacrificielle en tungstène, un matériau de jauge bien adapté sera par exemple un alliage nickel/chrome/silicium, de préférence en proportions respectives d'environ 0,5/0,4/0,1 (Ni_{0.5}/Cr_{0.4}/Si_{0.1)}. Cet alliage n'est pas attaqué par le bain de gravure du tungstène (tel qu'une solution aqueuse avec pour un litre d'eau : 34g KH₂PO₄ ; 13g KOH ; 33g K₃Fe₆). Bien que la sélectivité de gravure soit moins bonne, on pourra également utiliser un alliage de cuivre/nickel/manganèse, en proportions d'environ 0,55/0,44/0,01, tel que le constantan (Cu_{0.55}Ni_{0.44}Mn_{0.01}). Avec une couche sacrificielle en polymère, le choix des matériaux de jauge est très large, les produits d'attaque de la couche sacrificielle étant très peu actifs vis-à-vis des matériaux minéraux qui constituent les jauges.

La couche de matériau de jauges de contrainte est gravée de manière à :
- réaliser une ou plusieurs résistances de valeur désirée au-dessus de la couche sacrificielle, typiquement quatre résistances qui seront connectées en pont de Wheatstone ; la résistance peut être typiquement de quelques centaines à quelques milliers d'ohms, ce qui peut être obtenu avec des épaisseurs de couches de 5 à 500 nanomètres par exemple ;
- connecter les extrémités de ces résistances au circuit intégré 42, par exemple par l'intermédiaire des zones de contact 48 et 50 ménagées à la surface de celui-ci.

La connexion en pont de wheatstone et la liaison avec d'autres éléments de circuit intégré est faite par des conducteurs faisant partie du circuit intégré, ces conducteurs n'étant pas représentés. Un pont de wheatstone est une structure à faible impédance d'entrée, dont le déséquilibre est facilement mesurable par une amplificateur de tension différentielle.

L'étape suivante (figure 8) comprend le dépôt puis la gravure d'une couche de matériau 58 qui constituera la membrane autoportée sensible à la pression. Cette couche est une couche de matériau isolant. Le nitrure de silicium déposé à basse température (inférieure à 450°C) est le matériau préféré qui a de bonnes capacités d'autosustentation, d'élasticité, d'étanchéité au vide, et de résistance aux agressions chimiques extérieures. Le dépôt à basse température permet de ne pas dégrader le circuit électronique sous-jacent 42. La couche pourrait être constituée de plusieurs sous-couches de matériaux différents. L'épaisseur est typiquement de l'ordre du micromètre ou quelques micromètres. La gravure est faite de manière à constituer une membrane recouvrant totalement l'îlot de couche sacrificielle 52, y compris là où les jauges de contrainte recouvrent l'îlot, et débordant tout autour de l'îlot pour assurer une liaison rigide continue avec le substrat. Toutefois, dans l'opération de gravure, ou dans une gravure ultérieure, on ménage un ou plusieurs petits trous 60 là où la couche de membrane 58 est directement en contact avec la couche sacrificielle 52 (c'est-à-dire ni au-dessus des jauges ni au-dessus du substrat). Un seul petit trou 60 a été représenté pour la commodité au centre de la membrane, mais dans la pratique on prévoira plutôt une série de petits trous distribués à la périphérie de la membrane. Ces trous ont pour but de permettre la gravure ultérieure de la couche sacrificielle.

La figure 9 représente cette étape d'évacuation : par une attaque chimique anisotrope à travers les trous 60, on dissout la couche sacrificielle et on l'élimine totalement, laissant subsister une cavité V occupant tout l'espace préalablement occupé par l'îlot de couche sacrificielle. Le produit de gravure ne doit pas attaquer la membrane ni les jauges ni les éléments de circuit intégré formés dans le substrat à l'intérieur de la cavité V.

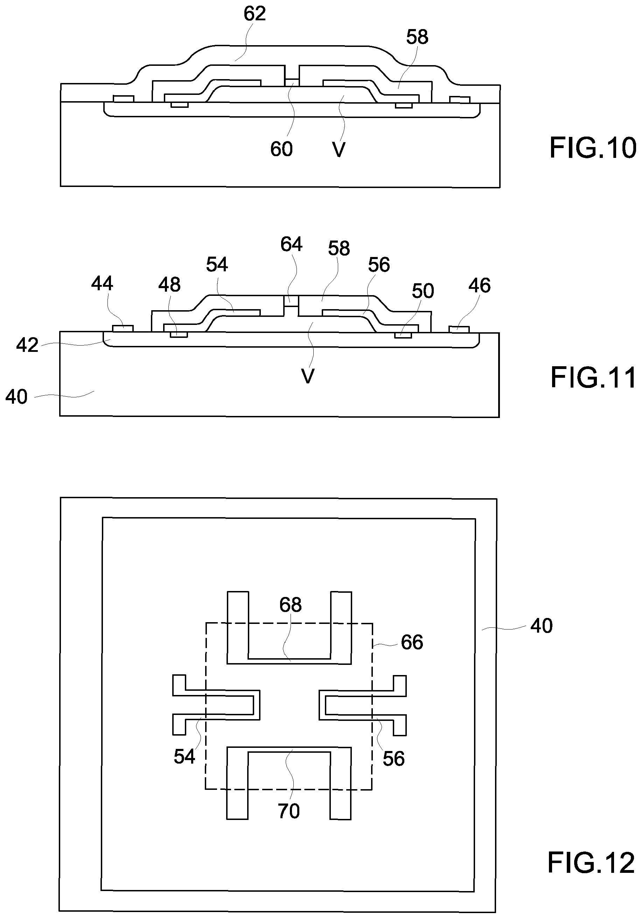

A ce stade, il faut boucher la cavité. On dépose (figure 10) une couche 62 d'un matériau à fort pouvoir couvrant qui comble le trou 60 sans pénétrer trop dans la cavité, comme cela est représenté sur la figure 10. Le nitrure de silicium, l'oxyde de silicium, peuvent convenir. Le dépôt est fait de préférence à très basse pression (inférieure à 50 Pa) afin de faire le vide dans la cavité avant de la boucher.

Cette couche 62 est ensuite gravée uniformément (ou si on le désire à travers un masque) pour ne laisser subsister qu'un bouchon 64 dans chaque petite ouverture 60 (figure 11). Elle peut aussi être laissée entière, notamment si elle est faite du même matériau que la membrane, auquel cas elle devient une partie de la membrane.

Après ces étapes, les jauges sont complètement protégées des agressions chimiques extérieures puisqu'elles sont à l'intérieur de la cavité.

La figure 11 représente le capteur de pression à ce stade de la fabrication. La figure 12 représente une configuration possible, vue de dessus, des jauges de contrainte. La membrane est représentée en forme carrée (trait tireté 66) mais elle pourrait être circulaire. Il y a quatre jauges symétriques deux à deux : 54 et 56, 68 et 70. Les extrémités de ces jauges, situées en dehors de la membrane, viennent en contact avec les zones telles que 48 et 50 du substrat pour être reliées entre elles, à une alimentation en tension, et aux amplificateurs de mesure. Le dessin des jauges est de préférence tel que les deux jauges 54 et 56 subissent des contraintes opposées aux contraintes subies par les jauges 68 et 70 lors d'une variation de pression exercée sur toute la membrane.

Il est important de noter que les éléments de circuit de mesure et même la totalité du circuit intégré dans le substrat (à l'exception des zones de contact avec les jauges et des plots de connexion avec l'extérieur) peuvent être situées sous la membrane 58, ce qui n'était pas possible dans les techniques antérieures, en particulier les techniques capacitives.

Les jauges résistives n'ont pas à être protégées de l'environnement ou des bains d'attaque chimique par une couche mince de protection. Les jauges voient donc la déformation maximale possible et fournissent donc le signal maximum possible. L'ajout d'une couche de protection augmenterait en effet la raideur de la membrane et rapprocherait également la jauge de la fibre neutre de la membrane. On entend par "fibre neutre" l'axe médian de la membrane (pour un matériau homogène). A l'extrême, la déformation de la jauge est nulle si elle est située sur la fibre neutre. A noter que l'effet d'une couche de protection est d'autant plus important que la membrane est mince, ce qui est le cas pour ce type de capteur fortement intégré.

A titre d'exemple, avec une membrane de nitrure de silicium d'épaisseur 1 micromètre et de diamètre 120 micromètres, l'allongement relatif d'une jauge peut être de l'ordre de 7.10⁻⁴, pour une pression d'1 bar ; avec un pont de wheatstone à quatre résistances alimenté par une tension de 3 volts, le signal obtenu est d'environ 4 millivolts, facile à amplifier et tout à fait suffisant pour des capteurs à bas coût.

Pour une application très importante qui est la mesure de la pression de pneumatiques de véhicules, avec une gamme de mesure de 9 bars on pourra par exemple avoir une épaisseur de 4 micromètres et un diamètre de 200 micromètres, ce qui donnera une déformation de l'ordre de 12.10⁻⁴. La flèche de la membrane sera inférieure à 2 micromètres, ce qui est compatible avec la faible épaisseur de la cavité.

Après la fin des étapes de fabrication collective sur tranche, la tranche est découpée en puces de capteurs individuels, les puces sont reliées à une embase, par exemple par des fils soudés sur les plages de contact 44, 46, et elles sont encapsulées en boîtier de telle manière que la membrane reste soumise à la pression à mesurer. Les jauges restent protégées même si la membrane est directement soumise à des agressions extérieures.

## Revendications

1. Capteur de pression réalisé selon une technologie de microélectronique, comportant :
• un substrat (40) comportant des circuits de mesure (42) ;
• une couche de matériau isolant déposée sur ledit substrat (40), ladite couche étant localement séparée dudit substrat de manière à former une cavité (V) hermétiquement fermée, ladite couche formant une membrane (58) déformable sous l'effet de la pression extérieure à la cavité,
• au moins une jauge résistive (54, 56) solidaire de la membrane et ayant une valeur de résistance variable en fonction des déformations de la membrane; ladite jauge résistive solidaire de cette couche de matériau isolant étant située sous la membrane à l'intérieur de la cavité fermée (V) et reliée électriquement auxdits circuits de mesure;
**caractérisé en ce que** ladite cavité est disposée au-dessus d'une partie des circuits de mesure.

2. Capteur de pression selon la revendication 1, **caractérisé en ce que** la cavité est située au-dessus du substrat, le substrat n'étant pas creusé pour constituer la cavité.

3. Capteur de pression selon l'une des revendications 1 et 2, **caractérisé en ce que** la cavité recouvre la majeure partie des circuits de mesure associés aux jauges de contrainte.

4. Capteur selon l'une des revendications 1 à 3, **caractérisé en ce que** la membrane est en nitrure de silicium.

5. Capteur selon l'une des revendications précédentes, **caractérisé en ce que** la membrane porte au moins deux et de préférence quatre jauges résistives assemblées dans un pont de Wheatstone à quatre résistances.

6. Capteur selon l'une des revendications 1 à 5, **caractérisé en ce que** les jauges de contrainte sont en alliage nickel/cuivre/silicium ou en alliage nickel/cuivre/manganèse.

7. Procédé de fabrication d'un capteur de pression à jauges de contraintes comportant une cavité fermée par une membrane, **caractérisé en ce qu'**il comporte les étapes suivantes : réalisation d'éléments de circuit électronique de mesure sur un substrat plan, dépôt d'une couche sacrificielle destinée à délimiter le volume d'une cavité vide, et gravure de cette couche pour laisser subsister un îlot de couche sacrificielle situé au-dessus d'une partie des éléments de circuit électronique, dépôt d'une couche résistive mince sur la couche sacrificielle et gravure de jauges résistives dans la couche résistive, dépôt sur les jauges et sur la couche sacrificielle d'au moins une couche isolante qui formera ultérieurement une membrane autoportée solidaire des jauges, gravure de cette couche isolante pour laisser subsister une membrane recouvrant la totalité de la couche sacrificielle à l'exception d'au moins une petite ouverture là où la couche isolante est en contact avec la couche sacrificielle, attaque de la couche sacrificielle à travers la petite ouverture par un produit n'attaquant pas le matériau des jauges résistives pour éliminer la totalité de cette couche, et dépôt d'un matériau de bouchage de la petite ouverture pour fermer hermétiquement la cavité.

8. Procédé selon la revendication 7, **caractérisé en ce que** le dépôt de matériau de bouchage est effectué sous basse pression pour que la cavité reste ensuite vide d'air.

9. Procédé selon l'une des revendications 7 et 8, **caractérisé en ce que** le matériau de la couche sacrificielle est du tungstène et les jauges de contrainte sont en alliage nickel/chrome/silicium ou en alliage nickel/cuivre/manganèse.

10. Procédé selon la revendication 9, **caractérisé en ce que** les proportions de l'alliage sont d'environ 0,5/0,4/0,1 pour le nickel/chrome/silicium, et environ 0,55/0,44/0,01 pour le cuivre/nickel/manganèse.

11. Procédé selon l'une des revendications 7 et 8, **caractérisé en ce que** le matériau de la couche sacrificielle est un polymère organique.

## Patentansprüche

1. Anhand einer mikroelektronischen Technologie hergestellter Drucksensor, welcher Folgendes beinhaltet:
• ein Substrat (40), welches Messschaltkreise (42) beinhaltet;
• eine Isoliermaterialschicht, welche auf dem Substrat (40) abgelagert ist, wobei die Schicht lokal von dem Substrat getrennt ist, um einen hermetisch geschlossenen Hohlraum (V) zu bilden, wobei die Schicht eine unter der Einwirkung des Drucks außerhalb des Hohlraums verformbare Membran (58) bildet,
• mindestens ein Widerstandsmessgerät (54, 56), welches fest mit der Membran verbunden ist und einen angesichts der Verformungen der Membran variablen Widerstandswert besitzt; wobei das Widerstandsmessgerät, welches fest mit dieser Isoliermaterialschicht verbunden ist, sich unter der Membran im Innern des geschlossenen Hohlraums (V) befindet und elektrisch mit den Messschaltkreisen verbunden ist;
**dadurch gekennzeichnet, dass** der Hohlraum oberhalb eines Teils der Messschaltkreise angeordnet ist.

2. Drucksensor nach Anspruch 1, **dadurch gekennzeichnet, dass** der Hohlraum sich oberhalb des Substrates befindet, wobei das Substrat nicht ausgehöhlt ist, um den Hohlraum zu bilden.

3. Drucksensor nach einem der Ansprüche 1 und 2, **dadurch gekennzeichnet, dass** der Hohlraum den Großteil der mit den Spannungsmessgeräten assoziierten Messschaltkreise bedeckt.

4. Sensor nach einem der Ansprüche 1 bis 3, **dadurch gekennzeichnet, dass** die Membran aus Siliziumnitrid besteht.

5. Sensor nach einem der vorhergehenden Ansprüche, **dadurch gekennzeichnet, dass** die Membran mindestens zwei, vorzugsweise vier Widerstandsmessgeräte trägt, welche in einer Wheatstone-Brücke mit vier Widerständen montiert sind.

6. Sensor nach einem der Ansprüche 1 bis 5, **dadurch gekennzeichnet, dass** die Spannungsmessgeräte aus einer Nickel-/Kupfer-/Silizium-Legierung oder aus einer Nickel-/Kupfer-/Mangan-Legierung bestehen.

7. Herstellungsverfahren eines Drucksensors mit Spannungsmessgeräten, welcher einen durch eine Membran verschlossenen Hohlraum beinhaltet, **dadurch gekennzeichnet, dass** es folgende Schritte beinhaltet: Herstellen von Elektronik-Schaltkreis-Bauteilen auf einem ebenen Substrat, Ablagern einer Opferschicht, welche bestimmt ist, das Volumen eines leeren Hohlraums zu begrenzen, und Gravieren dieser Schicht, um eine Insel der Opferschicht oberhalb eines Teils der Elektronik-Schaltkreis-Bauteile bestehen zu lassen, Ablagern einer dünnen Widerstandsschicht auf der Opferschicht und Gravieren von Widerstandsmessgeräten in die Widerstandsschicht, Ablagern auf den Messgeräten und auf der Opferschicht von mindestens einer Isolierschicht, welche später eine selbsttragende Membran bildet, welche fest mit den Messgeräten verbunden ist, Gravieren dieser Isolierschicht, um eine Membran bestehen zu lassen, welche die Gesamtheit der Opferschicht bedeckt, mit Ausnahme von mindestens einer kleinen Öffnung an derjenigen Stelle, wo die Isolierschicht in Kontakt mit der Opferschicht steht, Angreifen der Opferschicht durch die kleine Öffnung mit Hilfe eines Produkts, welches das Material der Widerstandsmessgeräte nicht angreift, um die Gesamtheit dieser Schicht zu beseitigen, und Ablagern eines Produkts zum Verstopfen der kleinen Öffnung zum hermetischen Verschließen des Hohlraums.

8. Verfahren nach Anspruch 7, **dadurch gekennzeichnet, dass** die Ablagerung des Verstopfungsmaterials unter Niederdruck erfolgt, damit der Hohlraum anschließend luftleer bleibt.

9. Verfahren nach einem der Ansprüche 7 und 8, **dadurch gekennzeichnet, dass** das Material der Opferschicht Wolfram ist und die Spannungsmessgeräte aus einer Nickel-/Chrom-/Silizium-Legierung oder aus einer Nickel-/Kupfer-/Mangan-Legierung bestehen.

10. Verfahren nach Anspruch 9, **dadurch gekennzeichnet, dass** die Proportionen der Legierung ungefähr 0,5/0,4/0,1 bei Nickel/Chrom/Silizium betragen und ungefähr 0,55/0,44/0,01 bei Kupfer/Nickel/Mangan betragen.

11. Verfahren nach einem der Ansprüche 7 und 8, **dadurch gekennzeichnet, dass** das Material der Opferschicht ein organisches Polymer ist.

## Claims

1. A pressure sensor produced according to a microelectronics technology, comprising:
• a substrate (40) comprising measurement circuits (42);
• a layer of insulating material deposited on said substrate (40), said layer being locally separated from said substrate such as to form a hermetically sealed cavity (V), said layer forming a diaphragm (58) that can deform under the effect of the pressure outside the cavity;
• at least one resistance strain gage (54, 56) fastened to the diaphragm and having a resistance value that varies as a function of the deformation of the diaphragm, said the resistance strain gage fastened to this layer of insulating material being located beneath the diaphragm inside the sealed cavity (V) and electrically connected to said measurement circuits;
**characterized in that** said cavity is arranged over a part of the measurement circuits.

2. The pressure sensor as claimed in claim 1, **characterized in that** the cavity is located on top of the substrate, the substrate not being recessed to form the cavity.

3. The pressure sensor as claimed in either of claims 1 and 2, **characterized in that** the cavity covers the major part of the measurement circuits associated with the strain gages.

4. The sensor as claimed in one of claims 1 to 3, **characterized in that** the diaphragm is made of silicon nitride.

5. The sensor as claimed in one of the preceding claims, **characterized in that** the diaphragm bears at least two, and preferably four, resistance strain gages joined together in a four-resistor Wheatstone bridge.

6. The sensor as claimed in one of claims 1 to 5, **characterized in that** the strain gages are made of a nickel/copper/silicon alloy or a nickel/copper/manganese alloy.

7. A process for manufacturing a strain-gage pressure sensor, comprising a cavity sealed by a diaphragm, **characterized in that** it comprises the following steps: production of measurement electronic circuit elements on a planar substrate; deposition of a sacrificial layer intended to define the volume of an empty cavity, and etching of this layer so as to leave an island of sacrificial layer located above a part of the electronic circuit elements; deposition of a thin resistive layer on the sacrificial layer and etching of the resistance strain gages in the resistive layer; deposition on the strain gages and on the sacrificial layer of at least one insulating layer that will subsequently form a self-supporting diaphragm fastened to the strain gages; etching of this insulating layer so as to leave a diaphragm covering the entire sacrificial layer with the exception of at least a small aperture at the point where the insulating layer is in contact with the sacrificial layer; attacking of the sacrificial layer through the small aperture by an etchant that does not attack the material of the resistance strain gages, so as to remove the totality of this layer; and deposition of a plugging material, for filling up the small aperture so as to hermetically seal the cavity.

8. The process as claimed in claim 7, **characterized in that** the deposition of the plugging material is carried out at low pressure so that the cavity then remains void of air.

9. The process as claimed in either of claims 7 and 8, **characterized in that** the material of the sacrificial layer is tungsten and the strain gages are made of a nickel/chromium/silicon alloy or a nickel/copper/manganese alloy.

10. The process as claimed in claim 9, **characterized in that** the proportions of the alloy are about 0.5/0.4/0.1 in the case of nickel/chromium/silicon and about 0.55/0.44/0.01 in the case of copper/nickel/manganese.

11. The process as claimed in either of claims 7 and 8, **characterized in that** the material of the sacrificial layer is an organic polymer.
